# EUROPÄISCHE PATENTSCHRIFT

(11) **EP 1 219 564 B1**
(45) Veröffentlichungstag und Bekanntmachung des Hinweises auf die Patenterteilung: **14.04.2004**
(21) Anmeldenummer: 01127545.0
(22) Anmeldetag: 19.11.2001
(51) Int. Cl.: B66F 19/00, H02G 9/10

(54) **Heber für Schachtdeckel oder dgl.**
Lifting tool for manhole cover or the like
Dispositif de levage de couvercle de regard ou similaire

(30) Priorität: 02.01.2001 DE 10100045
(43) Veröffentlichungstag der Anmeldung: 03.07.2002
(73) Patentinhaber: Schuller, Hans, 74343 Sachsenheim (DE); Kledig, Ralf, 74321 Bietigheim-Bissingen (DE)
(72) Erfinder: Schuller, Hans, 74343 Sachsenheim (DE); Kledig, Ralf, 74321 Bietigheim-Bissingen (DE)
(74) Vertreter: Fleck, Hermann-Josef, Dr.-Ing.

(56) Entgegenhaltungen:
- US-A- 262 813
- US-A- 2 494 214
- US-A- 3 275 299
- US-A- 4 838 521
- US-A- 4 852 855
- US-A- 5 292 107
- US-B1- 6 202 985

## Beschreibung

Die Erfindung bezieht sich auf einen Heber für Schachtdeckel oder dgl. mit im unteren Bereich eines Handhebels seitlich an einer quer verlaufenden Achse angeordneten Rädern und einem starr nach vorne vorragenden Hebearm, der mindestens einen auf seiner Unterseite vorstehenden Haken zum Einhängen in einer Deckelöffnung trägt, wobei den Rädern eine ebenfalls im unteren Bereich des Handhebels angebrachte Abstützvorrichtung vorgelagert ist, die eine sich in Querrichtung erstreckende oder mindestens zwei in Querrichtung voneinander beabstandete, von hinten nach vorn verlaufende, konvex nach unten gekrümmte Kufen aufweist und mit der der Heber bei Ansatz an den Deckel vor dem Anheben desselben und in einer ersten Anhebphase außerhalb des Deckelrandes abgestützt ist, während die Räder vom Boden beabstandet sind.

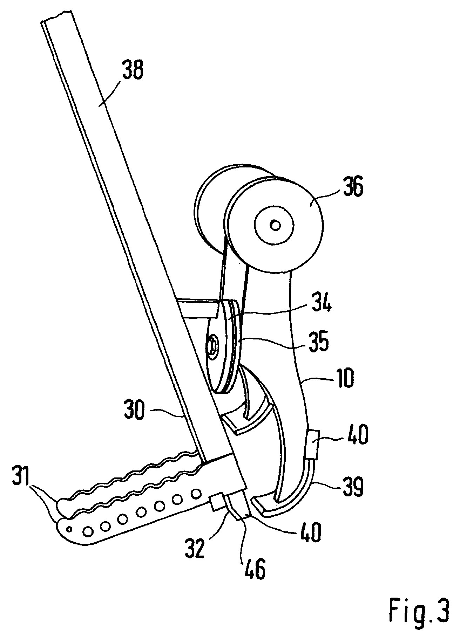

Ein Heber dieser Art zum Anheben von Schachtdeckeln oder dgl. ist in der US 3,275,299 A angegeben. In eine Deckelöffnung wird ein an einem nach vorne ragenden Hebearm befindlicher Haken eingehängt, der zwischen der Radachse und dem Schwerpunkt des Deckels in dessen den Rädern des Hebers zugekehrtem oberem Randbereich angeordnet ist. Zwischen dem Haken und den Aufstellpunkten der Räder sind sich in Querrichtung bzw. Schwenkrichtung erstreckende, nach unten konvexe Kufen angeordnet. Wird nun der von dem Deckel schräg nach oben und hinten wegragende Handhebel mit einem daran befindlichen Handgriff nach unten geschwenkt, so hebt sich zunächst der den Rädern zugekehrte hintere Teil des Deckels ab, bis er im Bereich der Unterseite des Hebearms an einem zwischen dem Haken und den Kufen ausgebildeten Anschlag anschlägt, und anschließend hebt sich der vordere Bereich des Deckels aus seiner Einfassung. Schließlich sind nach weiterem Abschwenken des Hebearmes die Räder auf dem Boden aufgestützt. Der Schwerpunkt des in der Regel relativ schweren Deckels liegt dabei, wie aus Fig. 3 ersichtlich, immer noch weit entfernt von der Radachse. Hierdurch muss eine entsprechend große Kraft an dem Handhebel zum Manövrieren des Deckels aufgebracht werden.

Auch bei einem in der US 4,852,855 A ist ein Heber gezeigt, bei dem zwischen starren Haken und den Rädern ein Abstützmittel angeordnet ist, die beim Anheben des Deckels während des Abwärtsschwenkens einer Handhabe wirksam ist, bevor die Räder beim weiteren Abwärtsschwenken die Abstützung auf dem Boden übernehmen. Das Abstützmittel besteht dabei in einem bis nahe an die Räder ragenden Rand einer schrägen Platte.

Der Erfindung liegt die Aufgabe zugrunde, einen Heber der eingangs genannten Art bereitzustellen, mit dem die Handhabung beim Anheben und Bewegen des Deckels erleichtert wird.

Diese Aufgabe wird mit den Merkmalen des Anspruchs 1 gelöst. Hiernach ist vorgesehen, dass die Abstützvorrichtung ferner mindestens zwei in Querrichtung voneinander beabstandete in Gebrauchsstellung nahe dem Deckelrand auf dem Boden abzustützende Hubstützen oder eine quer gerichtete Hubleiste aufweist, dass ein unterster Bereich der Kufe(n) bei eingehängten Haken, aber noch nicht angehobenem Deckel, von dem Boden beabstandet ist und die Abstützung in dieser Phase allein mit der/den Hubstützen erfolgt und dass der Haken entlang des Hebearms verstellbar und pendelnd gelagert ist.

Mit diesen Maßnahmen wird insbesondere in der anfänglichen Anhebephase das Ausheben des Deckels aus seiner Fassung wesentlich erleichtert, da die Abstützung beim Anheben möglichst nahe an dem zugekehrten Deckelrand, d.h. möglichst nahe dem Deckelschwerpunkt ermöglicht wird und zunächst eine große Anhebekraft zum Lösen des Deckels bewirkt wird, bevor dieser dann kontrolliert durch Abschwenken über die Kufen angehoben wird, bis die Abstützung auf den Rädern erreicht ist. In dieser Anhebephase ist der Deckelschwerpunkt beim Nach-hint-Schwenken des Deckels schon relativ nahe zur Senkrechten über der Radachse gewandert, so dass sich nun der Heber mit dem Deckel leicht auf den Rädern manövrieren lässt. Die Anordnung des Hebers mit seiner Abstützvorrichtung möglichst nahe am Deckelrand und ein einfaches Einhängen werden dadurch begünstigt, dass der Haken entlang des Hebearms verstellbar und/oder pendelnd gelagert ist.

Ein einfaches Anheben des Deckels in der Anfangsphase und ein weiter Schwenkbereich bis in die Stellung des Hebers, in der der Schwerpunkt des Deckels möglichst weit in den Bereich der Senkrechten über der Radachse verlagert ist, wird dadurch unterstützt, dass der Aufbau in der Weise ausgelegt ist, dass bei eingehängtem Haken, aber noch nicht angehobenem Deckel, der Handhebel senkrecht nach oben oder geringfügig (bis zu 20°) nach vorn gerichtet ist. Mit diesen Maßnahmen kann der Heber auch besonders einfach mit seinem mindestens einen Haken in die entsprechende Deckelöffnung eingehängt werden, da er leicht zu positionieren ist.

Zum einfachen Betätigen des Hakens kann weiterhin vorgesehen sein, dass der Haken zur Bedienung mit einer nach oben gerichteten Stange verbunden ist.

Zum Anheben von besonders schweren Deckeln kann es vorteilhaft sein, dass ein Zusatzhaken vorgesehen ist, der über ein Seil verstellbar mittels einer Halterung an dem Handhebel angebunden ist. Der Zusatzhaken kann dabei insbesondere bezüglich der Abstützvorrichtung vor dem Schwerpunkt des Deckels in einer entsprechenden Deckelöffnung eingehängt werden.

Um den der Abstützvorrichtung zugekehrten hinteren oberen Bereich des Deckels nach Anheben des hinteren Deckelbereichs stabil abzustützen, ist weiterhin vorgesehen, dass die Abstützvorrichtung mindestens einen ihr vorgelagerten Anschlag als Widerlager für einen oberen Randbereich des Deckels in dessen angehobenem Zustand aufweist. Dabei wird eine eindeutige stabile Anlage dadurch erreicht, dass der Anschlag nach hinten mit einem nach unten gerichteten Absatz begrenzt ist.

Um den Handhebel mit dem Hebearm relativ zu den Rädern und einem Teil der Abstützvorrichtung horizontal verstellen zu können, kann weiterhin vorgesehen sein, dass zumindest ein Teil der Abstützvorrichtung über ein horizontales Drehgelenk mit vertikaler Drehachse mit dem unteren Bereich des Handhebels verbunden ist, wobei an dem Teil auch die Räder angeordnet sind.

Für eine Anpassung des Handhebels und möglichst kleine Abmessungen für die Aufbewahrung ist weiterhin die Maßnahme vorteilhaft, dass die Länge des Handhebels teleskopartig verstellbar ist.

Die Erfindung wird nachfolgend anhand von Ausführungsbeispielen unter Bezugnahme auf die Zeichnungen näher erläutert. Es zeigen:
- Fig. 1: einen an einen Schachtdeckel angesetzten Heber in perspektivischer Ansicht,
- Fig. 2A und 2B: einen etwas abgewandelten Heber nach Fig. 1 in perspektivischer Seitenansicht und Vorderansicht und
- Fig. 3: ein weiteres Ausführungsbeispiel für einen Heber in perspektivischer Ansicht.

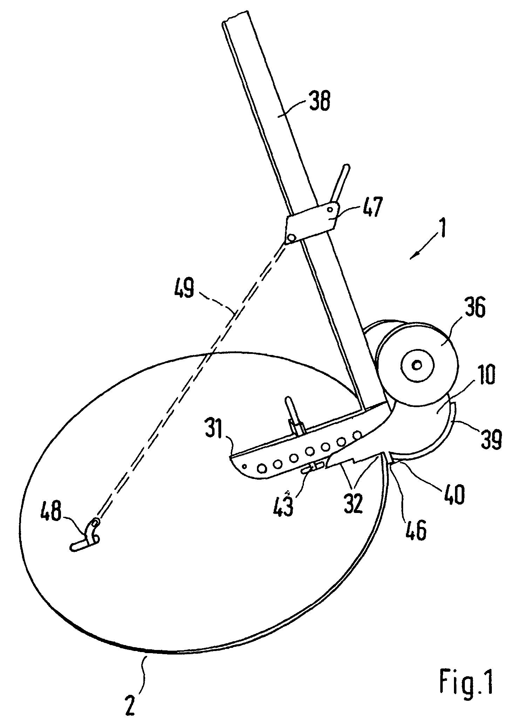

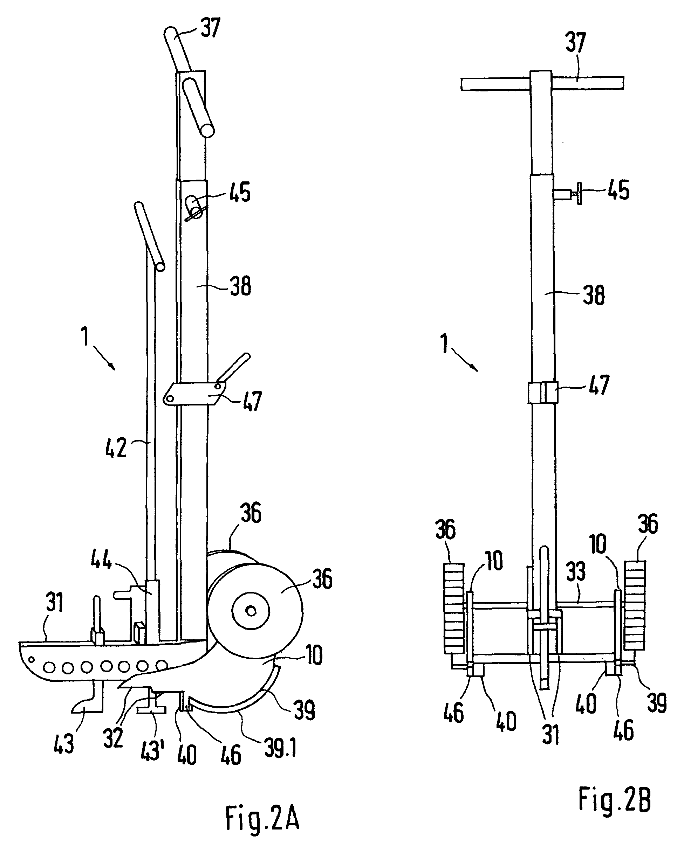

Fig. 1 zeigt einen Heber 1 für Schachtdeckel 2 oder dgl., der außerhalb des Deckelrands mit einer an einem Fußteil 10 angebrachten Stützvorrichtung auf dem Boden abgestützt ist und mit einem von der Stützvorrichtung nach vorne vorkragenden Hebearm 31 den Deckel 2 überragt. Ein an der Unterseite des Hebearms 31 vorstehender und an diesem angebrachter Haken 43 ist in eine Deckelöffnung eingeführt und in dem Deckel 2 eingehängt. An dem hinteren Bereich des Hebearms 31 ist ein z. B. im Wesentlichen rechtwinklig nach oben ragender Handhebel 38 starr angebunden. Die Abstützvorrichtung weist etwa unterhalb des Handhebels 38 zwei quer zu dem Hebearm 31 seitlich versetzte Hubstützen 46 auf (vgl. auch Fig. 2B), die nahe dem Deckelrand auf dem Boden abgestützt sind. Vom Deckelrand aus gesehen hinter den Hubstützen 46 weist die Abstützvorrichtung zwei parallele, quer zu dem Hebearm 31 beabstandete, nach unten konvex gekrümmte Kufen 39 auf, deren vorderer Endbereich in etwa bis zu den Hubstützen 46 reicht, wie auch aus den Fig. 2A und 2B ersichtlich. In Querrichtung neben den Hubstützen 46, vorliegend auf deren Innenseite, sind des Weiteren Fixiergummis 40 angebracht, die zum besseren Halt des außerhalb des Deckelrands aufgestellten Hebers 1 dienen. Im hinteren Bereich des Fußteils 10 sind an einer quer verlaufenden horizontalen Radachse 33 seitlich zwei Räder 36 angebracht.

Wie aus Fig. 1 weiterhin ersichtlich, kann ein im vorderen Bereich des Deckels 2 einzuhängender Zusatzhaken 48 über ein (gestrichelt eingezeichnetes) Seil 49 mittels einer Halterung 47 an dem Handhebel 38 angebunden sein.

Wie Fig. 2A des Weiteren zeigt, kann der Haken 43 mit einem kurzen Schaft an dem Hebearm 31, und zwar in Längsrichtung zu diesem verstellbar und vorzugsweise pendelnd zum einfachen Einhängen in die Deckelöffnung gelagert sein. Alternativ kann der Haken 43' mit einer Stangenführung 44, ebenfalls in Längsrichtung des Hebearms 31 verstellbar an diesem angebracht und mit einer nach oben ragenden Stange 42 zum Einführen des Hakens 43' und Verdrehen desselben verbunden sein. In der Regel reicht ein Haken 43, 43', falls erforderlich können jedoch auch mehrere Haken quer nebeneinanderliegend je nach Anordnung der Deckelöffnungen vorgesehen sein.

Wie aus den Fig. 1, 2A und 2B weiterhin ersichtlich, sind die konvex nach unten gekrümmten Kufen 39 an der Unterseite des Fußteils 10 angebracht, das in seinem vorderen Bereich auf seiner Unterseite gegenüber dem unteren Ende der Hubstütze 46 nach oben beabstandet zwei Anschlagabschnitte 32 aufweist, die über einen nach unten gerichteten Absatz voneinander getrennt sind, wobei der vordere Anschlag 32 höher liegt als der hintere. Der Anschlag dient als Widerlager für den oberen zugekehrten Randbereich des Deckels 2 beim Anhebevorgang. Der vordere Anschlag kann z.B. ausgenutzt werden, um eine gitterförmige Schachtabdeckung anzuheben, bei der die erste Sprosse relativ weit zurückversetzt ist. Mit ihrem hinteren Bereich sind die beiden Fußteile 10 mit der Radachse 33 verbunden.

Der Handhebel 38 ist teleskopartig ausgebildet, wobei ein oberer Teleskopabschnitt als Innenrohr in einen unteren Teleskopabschnitt eingeführt und in einer gewünschten Auszugstellung mittels einer Verriegelung 45 festlegbar ist. An dem oberen Teleskopteil ist ein quergerichteter Handgriff 37 angebracht.

Zum Anheben des Deckels 2 wird der Heber 1 einfach an den Rand des Deckels 2 gestellt, wobei sich die Hubstützen 46 nahe dem Deckelrand auf dem Boden abstützen und der Haken 43 in die entsprechende Deckelöffnung einfach durch Verlagerung des Hebers 1 eingehängt wird. Dabei steht der Heber nur mit dem Fixiergummi 40 bzw. auch der Hubstütze 46, dessen Ende nur geringfügig oberhalb des Endes des Fixiergummis 40 liegt, auf dem Boden auf, während eine unterste Stelle 39.1 der Kufen 39 in diesem eingehängten Zustand vom Boden beabstandet ist. Der mit seinem unteren Bereich fest an dem Hebearm 31 angebrachte Handhebel 38 ist dabei im Wesentlichen senkrecht nach oben oder etwas nach vorne über den Deckel 2 geneigt gerichtet. Die Räder 36 sind in dieser Stellung relativ weit von dem Boden beabstandet.

Wird nun der Handhebel 38 nach hinten geschwenkt, so hebt sich zunächst die dem Heber 1 zugekehrte Deckelseite, bis der hintere Rand an dem hinteren Anschlag 32 anliegt. Beim weiteren Rückwärtsschwenken hebt sich dann der vordere Bereich des Deckels 2 an. Beim Rückwärtsschwenken geht zudem die Abstützung des Hebers von den Hubstützen 46 auf die Kufen 39 über und der Deckel kann leicht weiter angehoben werden, da der Abstützpunkt auf dem Boden immer noch möglichst nahe an dem Schwerpunkt des Deckels 2 liegt. Der Abrollvorgang über die festen Kufen 39 ermöglicht eine einfache Handhabung bei stabiler Schwenkbewegung. Wenn im weiteren Verlauf des Rückwärtsschwenkens der Schwerpunkt des Deckels relativ nahe an die Senkrechte über der Radachse 33 gewandert ist, verlagert sich die Abstützung auf die Räder 36, und der Deckel 2 kann in dieser Stellung mit dem Heber 1 leicht auf den Rädern 36 manövriert werden.

Da der Lastarm von dem Abstützpunkt bis zum Schwerpunkt des Deckels 2 immer möglichst gering gehalten wird, kann der Heber 1 entsprechend leicht aufgebaut werden, wodurch er gut handhabbar und relativ kompakt ausgebildet werden kann.

Ein weiteres Ausführungsbeispiel des Hebers 1 ist in Fig. 3 dargestellt. Hierbei ist zwischen der Abstützvorrichtung bzw. dem Fußteil 10 und dem Handhebel 38 eine horizontale Drehlagerung um eine vertikale Achse mit einem ersten Gelenk-teil 34 und einem zweiten Gelenkteil 35 in Form eines oberen und unteren Drehtellers ausgebildet. An dem Fußteil 10 sind die Kufen 39, ein zusätzlicher Fixiergummi 40 sowie die Räder 36 angebunden, während unterhalb des Hebelarms 31, und zwar im Bereich unterhalb des Handhebels 38 wiederum die Hubstützen 46 und die Fixiergummis 40 angeordnet sind. Wie aus dieser Fig. ersichtlich, weist der aus zwei seitlichen Plattenelementen bestehende Hebelarm 31 auf seiner Oberseite eine gewellte Struktur zum einfachen Verstellen des Hakens 43, 43' auf. Eine derartige Struktur kann auch bei den Ausführungsbeispielen nach den Fig. 1 bis 2B vorgesehen sein. Die Drehlagerung ermöglicht eine weitere Manövrierfähigkeit beim Abheben und Verlagern des Deckels 2.

## Patentansprüche

1. Heber für Schachtdeckel mit im unteren Bereich eines Handhebels (38) seitlich an einer quer verlaufenden Achse angeordneten Rädern (36) und einem starr nach vorne vorragenden Hebearm (31), der mindestens einen auf seiner Unterseite vorstehenden Haken (43) zum Einhängen in einer Deckelöffnung trägt, wobei den Rädern (36) eine ebenfalls im unteren Bereich des Handhebels (38) angebrachte Abstützvorrichtung vorgelagert ist, die eine sich in Querrichtung erstreckende oder mindestens zwei in Querrichtung voneinander beabstandete, von hinten nach vorn verlaufende, konvex nach unten gekrümmte Kufen (39) aufweist und mit der der Heber (1) bei Ansatz an den Deckel (2) vor dem Anheben desselben und in einer ersten Anhebphase außerhalb des Deckelrandes abgestützt ist, während die Räder (36) vom Boden beabstandet sind,
**dadurch gekennzeichnet,**
**dass** die Abstützvorrichtung ferner mindestens zwei in Querrichtung voneinander beabstandete, in Gebrauchsstellung nahe dem Deckelrand auf dem Boden abzustützende Hubstützen (46) oder eine quer gerichtete Hubleiste aufweist,
**dass** ein unterster Bereich (39.1) der Kufe(n) (39) bei eingehängten Haken (43, 43'), aber noch nicht angehobenem Deckel (2), von dem Boden beabstandet ist und die Abstützung in dieser Phase allein mit der/den Hubstützen (46) erfolgt und
**dass** der Haken (43, 43') entlang des Hebearms (31) verstellbar und pendelnd gelagert ist.

2. Heber nach Anspruch 1,
**dadurch gekennzeichnet,**
**dass** der Aufbau in der Weise ausgelegt ist, dass bei eingehängtem Haken (43, 43'), aber noch nicht angehobenem Deckel (2) der Handhebel (38) senkrecht nach oben oder geringfügig (bis zu 20°) nach vorn gerichtet ist.

3. Heber nach Anspruch 1 oder 2,
**dadurch gekennzeichnet,**
**dass** der Haken (43') zur Bedienung mit einer nach oben gerichteten Stange (42) verbunden ist.

4. Heber nach einem der vorhergehenden Ansprüche,
**dadurch gekennzeichnet,**
**dass** ein Zusatzhaken (48) vorgesehen ist, der über ein Seil (49) verstellbar mittels einer Halterung (47) an dem Handhebel (38) angebunden ist.

5. Heber nach einem der vorhergehenden Ansprüche,
**dadurch gekennzeichnet,**
**dass** der Abstützvorrichtung (39, 40, 46) mindestens ein Anschlag (32) als Widerlager für einen oberen Randbereich des Deckels (2) in dessen angehobenem Zustand vorgelagert ist.

6. Heber nach Anspruch 5,
**dadurch gekennzeichnet,**
**dass** der Anschlag (32) nach hinten mit einem nach unten gerichteten Absatz begrenzt ist.

7. Heber nach einem der vorhergehenden Ansprüche,
**dadurch gekennzeichnet,**
**dass** zumindest ein Teil (39) der Abstützvorrichtung (39, 40, 46) über ein horizontales Drehgelenk (34, 35) mit vertikaler Drehachse mit dem unteren Bereich des Handhebels (38) verbunden ist, wobei an dem Teil (39) auch die Räder (36) angeordnet sind.

8. Heber nach einem der vorhergehenden Ansprüche,
**dadurch gekennzeichnet,**
**dass** die Länge des Handhebels (38) teleskopartig verstellbar ist.

## Claims

1. Lifting device for manhole covers having wheels (36), which are disposed laterally in the lower region of a hand lever (38) on a transversely extending axle, said lifting device also having a lifting arm (31) which projects rigidly forwardly and supports at least one hook (43), which protrudes on its underside, for hooking in a cover opening, a supporting device, also mounted in the lower region of the hand lever (38), being mounted in front of the wheels (36), said supporting device having one convexly downwardly curved runner (39), which extends in the transverse direction, or having at least two convexly downwardly curved runners (39), which are spaced from each other in the transverse direction and extend forwardly from behind, and by means of which supporting device the lifting device (1) is supported when attached to the cover (2) prior to the lifting thereof and in an initial lifting phase externally of the cover edge, whilst the wheels (36) are off the ground, **characterised in that** the supporting device additionally has at least two lifting supports (46), which are spaced from each other in the transverse direction and are to be supported on the ground in the position of use in the vicinity of the cover edge, or it has one transversely orientated lifting bar, **in that** a lowermost region (39.1) of the runner (or runners) (39) is off the ground, with hook (43. 43') hooked-in, but with the cover (2) not yet lifted, and the supporting in this phase is effected purely by means of the lifting support or supports (46), and **in that** the hook (43, 43') is mounted so as to be adjustable along the lifting arm (31) and so as to oscillate.

2. Lifting device according to claim 1, **characterised in that** the construction is designed in such a manner that, with the hook (43, 43') hooked-in, but with the cover (2) not yet lifted, the hand lever (38) is orientated vertically upwardly or slightly (up to 20°) forwardly.

3. Lifting device according to claim 1 or 2, **characterised in that** the hook (43') is connected to an upwardly orientated rod (42) for operating purposes.

4. Lifting device according to one of the preceding claims, **characterised in that** an additional hook (48) is provided, which is connected to the hand lever (38) by means of a holder (47) so as to be adjustable via a cable (49).

5. Lifting device according to one of the preceding claims, **characterised in that** at least one stop member (32) is connected in front of the supporting device (39, 40, 46) in the form of support for an upper edge region of the cover (2) in the raised state of the same.

6. Lifting device according to claim 5, **characterised in that** the stop member (32) is defined rearwardly by a shoulder portion which is orientated downwards.

7. Lifting device according to one of the preceding claims, **characterised in that** at least one part (39) of the supporting device (39, 40, 46) is connected to the lower region of the hand lever (38) via a horizontal pivot joint (34, 35) with a vertical axis of rotation, the wheels (36) also being disposed on the part (39).

8. Lifting device according to one of the preceding claims, **characterised in that** the length of the hand lever (38) is telescopically adjustable.

## Revendications

1. Dispositif de levage d'un couvercle de regard, comprenant des roues (36), agencées sur chaque côté d'un axe transversal disposé dans la partie inférieure d'un levier à main (38), et un bras de levier (31) qui s'avance en saillie rigide vers l'avant et qui est muni d'au moins un crochet (43) en saillie sur sa face inférieure et destiné à être accroché dans un orifice du couvercle, un dispositif de support, également agencé dans la partie inférieure du levier à main (38), étant disposé devant les roues (36) et étant muni d'un patin (39) qui s'étend dans le sens transversal ou d'au moins deux patins (39) écartés l'un de l'autre dans le sens transversal, qui s'étendent de l'arrière vers l'avant et forment une courbure convexe vers le bas, et au moyen duquel/desquels le dispositif de levage (1), au moment de sa pose contre le couvercle (2), avant le levage de celui-ci et dans une première phase de levage, est en appui en dehors du bord du couvercle, alors que les roues (36) sont écartées du sol,
**caractérisé**
**en ce que** le dispositif de support comporte en outre au moins deux supports de levage (46), qui sont écartés l'un de l'autre dans le sens transversal et qui, dans la position d'utilisation, sont en appui sur le sol à proximité du bord du couvercle, ou une tige de levage orientée transversalement,
**en ce que**, lorsque le crochet (43, 43') est accroché, mais le couvercle (2) n'est pas encore relevé, une zone inférieure (39.1) du/des patin(s) (39) est écartée du sol et, dans cette phase, la mise en appui est assurée uniquement par le/les support(s) de levage (46), et
**en ce que** le crochet (43, 43') est logé de manière oscillante et réglable le long du bras de levier (31).

2. Dispositif de levage selon la revendication 1, **caractérisé en ce que** la structure est conçue de telle sorte que lorsque le crochet (43, 43') est accroché, mais le couvercle (2) n'est pas encore relevé, le levier à main (38) est orienté perpendiculairement vers le haut ou légèrement incliné (jusqu'à 20°) vers l'avant.

3. Dispositif de levage selon la revendication 1 ou 2, **caractérisé en ce que** le crochet (43'), pour être manoeuvré, est assemblé à une tige (42) orientée vers le haut.

4. Dispositif de levage selon l'une quelconque des revendications précédentes, **caractérisé en ce qu'**il est prévu un crochet supplémentaire (48), qui est assemblé par l'intermédiaire d'un câble (49) contre le levier à main (38), de manière réglable au moyen d'un élément de retenue (47).

5. Dispositif de levage selon l'une quelconque des revendications précédentes, **caractérisé en ce qu'**au moins une butée (32), formant une contre-butée pour une zone de bordure supérieure du couvercle (2), est agencée devant le dispositif de support (39, 40, 46) dans la position relevée dudit couvercle.

6. Dispositif de levage selon la revendication 5, **caractérisé en ce que** la butée (32) est délimitée vers l'arrière par un décrochement orienté vers le bas.

7. Dispositif de levage selon l'une quelconque des revendications précédentes, **caractérisé en ce qu'**au moins une partie (39) du dispositif de support (39, 40, 46) est assemblée avec la partie inférieure du levier à main (38), par l'intermédiaire d'une articulation rotative (34, 35) horizontale avec un axe de rotation vertical, les roues (36) étant également agencées au niveau de ladite partie (39).

8. Dispositif de levage selon l'une quelconque des revendications précédentes, **caractérisé en ce que** la longueur du levier à main (38) est réglable de manière télescopique.
